(19) Europäisches Patentamt
European Patent Office
Office européen des brevets

(11) EP 2 695 857 A1

(12) **EUROPEAN PATENT APPLICATION**
published in accordance with Art. 153(4) EPC

(43) Date of publication:
**12.02.2014 Bulletin 2014/07**

(51) Int Cl.:
***C01B 31/04*** (2006.01)      ***H01M 4/36*** (2006.01)
***H01M 4/587*** (2010.01)

(21) Application number: **12768047.8**

(22) Date of filing: **03.04.2012**

(86) International application number:
**PCT/JP2012/059059**

(87) International publication number:
**WO 2012/137770 (11.10.2012 Gazette 2012/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2011  JP 2011086266**

(71) Applicant: **Chuo Denki Kogyo Co., Ltd.
Myoko-shi
Niigata 949-2193 (JP)**

(72) Inventors:
• **NISHIHARA, Katsuhiro
Osaka-shi, Osaka 541-0041 (JP)**
• **YAMAMOTO, Hiroshi
Osaka-shi, Osaka 541-0041 (JP)**
• **NAGATA, Tatsuo
Osaka-shi, Osaka 541-0041 (JP)**
• **NEGI, Noriyuki
Osaka-shi, Osaka 541-0041 (JP)**
• **FUJIWARA ,Tooru
Myoko-shi, Niigata 949-2193 (JP)**

(74) Representative: **Jackson, Martin Peter
J A Kemp
14 South Square
Gray's Inn
London WC1R 5JJ (GB)**

(54) **MODIFIED NATURAL GRAPHITE PARTICLES**

(57)     A modified natural graphite material which provides a negative plate having improved adhesion between a negative electrode mixture and a current collector has a circularity of at least 0.92 and at most 1.0 and an incident angle dependence $S_{60/0}$ of the peak intensity ratio of at least 0.5 and at most 0.7 as determined by measurement of C K-edge X-ray absorption spectra using synchrotron radiation as an excitation source. It preferably satisfies at least one of the following conditions: an absolute specific gravity of at least 2.25 (g/cm$^3$), a tap density of at least 1.0 g/cm$^3$ and at most 1.4 g/cm$^3$, and linseed oil absorption of at least 20 cm$^3$/100 g and at most 50 cm$^3$/100 g. A carbonaceous material may adhere to at least a portion of the surface of the graphite particles.

**Fig. 7**

2 μm

EP 2 695 857 A1

**Description**

Technical Field

This invention relates to modified natural graphite particles which are useful as a negative electrode active material in a negative plate (negative electrode plate) of a non-aqueous electrolyte secondary battery and particularly a lithium ion secondary battery.

Background Art

A negative plate for a non-aqueous electrolyte secondary battery typified by a lithium ion secondary battery is prepared by coating a current collector with a negative electrode mixture which is formed by mixing at least a negative electrode active material and a binder followed by compaction. The collector is often made of a foil of copper or a copper alloy.

The negative electrode active material which is used is a material capable of occluding cations (positive ions) such as lithium ions therein at the time of charging. Typical materials used for a negative electrode active material include graphite substances, which have a layered crystal structure and thereby allow cations to be occluded between the layers. Graphite substances are broadly classified into natural graphite and artificial graphite. In general, natural graphite is less expensive than artificial graphite. Among types of natural graphite, those which have a flake shape and hence a high aspect ratio have a high degree of graphitization, which is indicative of crystallinity of graphite, and are therefore expected to have a high charge-discharge capacity (referred to below merely as capacity) when used as a negative electrode active material. However, due to the anisotropy of their shape, these types of natural graphite having a high aspect ratio have shortcomings such as that they are oriented when applied to a collector, they have a large initial irreversible capacity, and they have a low packing density. Accordingly, natural graphite particles having a high aspect ratio are not used as an active material as is, but are normally used after they are subjected to shape modification treatment.

Patent Document 1 and Non-Patent Document 1 disclose a method for modifying the shape of graphite particles in which Mechano Fusion (registered trademark) is used to modify the particle shape into a disc shape. Patent Document 2 discloses a method for spheroidizing graphite particles using a jet mill. Patent Documents 3 and 4 disclose a method for spheroidizing graphite particles using a pin mill.

A binder, which is the other essential component of a negative electrode mixture, serves to adhere particles of a negative electrode active material to each other or to a collector. As long as the required adhesion is obtained, it is desirable that the binder have a high availability. In particular, in view of the requirement in recent years that the density of an electrode (the capacity per unit volume of a negative electrode mixture) be increased, there is a tendency to decrease the total amount of a binder used in the mixture in order to minimize the amount of a binder which exists between graphite particles without contributing to adhesion of particles of a negative electrode active material to each other or to a collector and which thereby interferes with densification of an electrode.

Prior Art Documents

Patent Documents

Patent Document 1: JP 2007-169160 A
Patent Document 2: JP 11-263612 A
Patent Document 3: JP 2003-238135 A
Patent Document 4: JP 2008-24588 A

Non-Patent Documents

Non-Patent Document 1: K. Ohzeki et al., Tanso (Carbon), 2005, No. 217, pp. 99 - 103

Summary of the Invention

When the amount of a binder used in a negative electrode mixture which is used in the manufacture of a negative plate of a non-aqueous electrolyte secondary battery is simply decreased, the bonding strength of particles of a negative electrode active material to each other or to a collector decreases, leading to the problem that the negative electrode mixture drops off the collector or negative plate during a manufacturing process of a negative plate or during assembly of a battery. Particularly, when it is desired to increase the speed of manufacture or assembly, due to a tendency for the bending force or tensile force applied to the layer of a negative electrode mixture formed on a collector or to a negative plate to increase, the above problem that the negative electrode mixture drops off tends to occur easily. When a negative electrode mixture drops off, it produces not only a deterioration of the product quality but also a decrease in product yield and a significant decrease in productivity caused by stopping of a production line. Considering that the use of non-aqueous electrolyte secondary batteries for automobiles and electric power storage as well as for consumer appliances is expanding, it is important to reduce the manufacturing costs of the batteries by improving productivity.

The object of the present invention is to solve the above-mentioned problem by providing a natural graphite substance capable of producing a negative plate having improved bonding strength.

As a result of investigations aimed at achieving this object, the present inventors obtained the following new findings.

(A) Among the conventional treatment methods for modifying the shape of natural graphite particles having a high aspect ratio, a method in which a trituration-type grinding means such as Mechano Fusion (registered trademark) is used cannot sufficiently spheroidize graphite particles. Other shape modifying methods are all focused on modification of the overall shape of graphite particles. Therefore, although a reduction in anisotropy of the shape can be achieved, the surfaces of the particles remain rough.

(B) When graphite particles have a rough surface, if the amount of a binder which is used is small, only protrusions on the rough surface adhere to adjoining graphite particles or a current collector. Accordingly, the bonding strength between graphite particles or between a graphite particle and a collector decreases, thereby causing a negative electrode mixture to easily drop off the collector or a negative plate.

(C) In order to restrain a negative electrode mixture from dropping off, it is efficient to improve (smoothen) the roughness of the surface of graphite particles by  a shape modifying treatment of natural graphite.

(D) A preferable means for quantitatively assessing the surface roughness of graphite particles is measurement of the degree of orientation of graphite particles by means of C (=carbon) K-edge XAS(=X-ray absorption spectroscopy) spectra combined with measurement of the amount of absorption of linseed oil.

The present invention, which was completed based on the above findings, is modified natural graphite particles characterized by having a circularity of at least 0.92 and having an incident angle dependence $S_{60/0}$ of the peak intensity ratio defined by the following equation of at least 0.5 and at most 0.7, the peak intensity ratio being determined by measurement of C K-edge (Carbon K-edge) X-ray absorption spectra using SR(=synchrotron radiation) as an excitation source:

$$S_{60/0} = I_{60} / I_0$$

where

$$I_{60} = B_{60} / A_{60}$$

$$I_0 = B_0 / A_0$$

$A_{60}$: the intensity of the absorption peak assigned to the transition from C-1s level to $\pi^*$ level in a C K-edge X-ray absorption spectrum of particles when measured with synchrotron radiation having an angle of incidence of 60°;
$B_{60}$: the intensity of the absorption peak assigned to the transition from C-1s level to $\sigma^*$ level in a C K-edge X-ray absorption spectrum of particles when measured with synchrotron radiation having an angle of incidence of 60°;
$A_0$: the intensity of the absorption peak assigned to the transition from C-1s level to $\pi^*$ level in a C K-edge X-ray absorption spectrum of particles when measured with synchrotron radiation having an angle of incidence of 0°; and
$B_0$: the intensity of the absorption peak assigned to the transition from C-1s level to $\sigma^*$ level in a C K-edge X-ray absorption spectrum of particles when measured with synchrotron radiation having an angle of incidence of 0°.

Circularity is expressed by the following equation and has a maximum value of 1:

$$\text{Circularity} = (\text{Circumference of a circle having the same area as a projected shape of a particle}) / (\text{Circumference of the projected shape of the particle}).$$

The projected shape is the shape obtained by projecting a particle which is being measured on a two-dimensional plane. The circumference of a circle having the same area as a projected shape of a particle and the circumference of the projected shape of the particle are determined by image processing of the image of the projected shape.

In preferred embodiments, modified natural graphite particles according to the present invention satisfy at least one of the following conditions (a) to (c):

(a) they have an absolute specific gravity of at least 2.25 (g/cm$^3$),
(b) they have a tap density of at least 1.0 g/cm$^3$ and at most 1.4 g/cm$^3$, and
(c) they have linseed oil absorption of at least 20 cm$^3$/100 g and at most 50 cm$^3$/100 g.

The present invention also provides carbon-deposited graphite particles comprising the above described modified natural graphite particles and a carbonaceous material adhering to at least a portion of the surface of the graphite particles.

Modified natural graphite particles according to the present invention have a sufficiently smoothened surface, so they make it possible to prepare a negative plate having an adequate bonding strength between a negative electrode mixture and a current collector even when the amount of a binder in the negative electrode mixture is suppressed. Such a negative plate is of high quality and can be manufactured with high productivity. As a result, a non-aqueous electrolyte secondary battery having a negative plate prepared using modified natural graphite particles according to the present invention is also of high quality and can be manufactured with high productivity.

Brief Description of the Drawings

Figure 1 is a diagram showing the principle of measurement by X-ray absorption spectroscopy employed in the present invention as compared to X-ray photoelectron spectroscopy (XPS).

Figure 2 is a diagram showing the basic concept of a method for measuring X-ray absorption spectroscopy by means of synchrotron radiation used in the present invention.

Figure 3 shows C K-edge NEXAFS spectra when carbon is irradiated with synchrotron radiation having different angles of incidence (0°, 30°, and 60°), wherein Figure 3(A) is a case in which the carbon is a single crystal of HOPG (Highly Oriented Pyrolytic Graphite), and Figure 3(B) is a case in which the carbon is an amorphous carbon vapor deposition film (with a thickness of 10 nm).

Figure 4 is a diagram explaining a method for quantitatively assessing the degree of orientation of surface graphite crystals according to the present invention by taking a case in which the sample is HOPG as an example.

Figure 5(A) is an explanatory diagram conceptually showing the process in which natural graphite is granulated by spheroidizing treatment, Figure 5(B) shows a SEM observation image of spheroidized graphite in the course of spheroidizing treatment, and Figure 5(C) shows an optical micrograph in cross section of spheroidized graphite in the course of spheroidizing treatment.

Figure 6 shows a SEM observation image of a natural graphite particle after spheroidizing treatment.

Figure 7 shows a SEM observation image of a modified natural graphite particle according to the present invention obtained by carrying out smoothening treatment after spheroidizing treatment.

Modes for Carrying Out the Invention

Modified natural graphite particles and a method for their manufacture will be explained below.

1. Natural graphite particles

Natural graphite particles (referred to below as raw graphite material), which are raw materials of modified natural graphite particles according to the present invention, are particles of flake-shaped graphite (specifically the below-described flake graphite and vein graphite) which has not undergone any modification treatment or heat treatment. Modified natural graphite particles can be manufactured by subjecting the natural graphite particles to the below-described shape-modifying treatment, for example.

Based on its outer appearance and properties, natural graphite is classified as flake graphite, vein graphite (also called massive graphite), and amorphous graphite. Flake graphite and vein graphite are nearly completely crystalline, while amorphous graphite has a lower crystallinity. The quality of natural graphite is determined primarily by the place of origin and the vein from which it is derived. Flake graphite is produced in locations such as Madagascar, China, Brazil, the Ukraine, Canada, Vietnam, and Australia. Vein graphite is produced primarily in Sri Lanka. Amorphous graphite is produced in locations such as the Korean Peninsula, China, and Mexico.

Since a high capacity is demanded of modified natural graphite particles, flake graphite and vein graphite, whith both have a high crystallinity, are suitable as the raw graphite. One criterion for assessing the crystallinity of graphite particles is the absolute specific gravity thereof. The raw graphite preferably has an absolute specific gravity of at least 2.25 $g/cm^3$. The absolute specific gravity of graphite is not significantly affected by mechanical modification treatment, so the resulting modified natural graphite particles also preferably have an absolute specific gravity of at least 2.25 $g/cm^3$.

The shape and particle size of the raw graphite are not critical. The raw graphite may be prepared by mixing two or more types of graphite having different places of origin or belonging to different classes.

In the present invention, the particle shape is assessed in terms of circularity, which is used as an index of sphericity. The circularity is determined by the following equation dealing with the projected shape of a particle:

$$Circularity = (Circumference\ of\ a\ circle\ having\ the\ same\ area\ as\ a\ projected\ shape\ of\ a\ particle) / (Circumference\ of\ the\ projected\ shape\ of\ the\ particle).$$

When the projected shape makes a perfect circle, its circularity is 1. Therefore, the maximum value of circularity is 1. A particle having a circularity of 1 is expected to have a particularly high degree of sphericity when it is assessed three dimensionally for sphericity. Therefore, it can be said that the higher (the closer to 1) is the circularity of a particle, the higher is its sphericity. The projected shape of particles can be obtained by an image observed with an optical microscope or a scanning electron microscope.

For example, when flake graphite is used as the raw graphite, the circularity of the raw graphite is usually in the vicinity of 0.85 and seldom exceeds 0.90. The raw graphite may be one having such a low circularity, and the circularity of the raw graphite is not critical. In the present invention, the raw graphite becomes modified natural graphite particles having a circularity of at least 0.92 after it has been subjected to modification treatment.

In the present invention, the size of graphite particles is assessed in terms of the mean particle diameter, which is the median diameter of particles in a volume-based particle size distribution determined by light scattering diffractometry. Such a particle size distribution can be measured using a laser diffraction and scattering particle size analyzer (LA-910) manufactured by Horiba, Ltd., for example.

If the raw graphite has an excessively large particle size, the efficiency of spheroidizing treatment which is carried out in order to obtain modified natural graphite particles is decreased. Therefore, the raw graphite preferably has a mean particle diameter of at most 5 mm and particularly preferably at most 200 $\mu$m. On the other hand, if the mean particle diameter of the raw graphite is excessively small, it may be difficult to control the shape by shape modifying treatment with some specific means, or there may be a concern that the raw graphite causes air pollution with dust. Therefore, the mean particle diameter of the raw graphite is preferably at least 3 $\mu$m and particularly preferably at least 5 $\mu$m.

2. Modified natural graphite particles

Modified natural graphite particles according to the present invention have a circularity of at least 0.92 and an incident angle dependence $S_{60/0}$ of the peak intensity ratio (details of which will described below) of at least 0.5 and at most 0.7, with the peak intensity ratio being determined by measurement of C K-edge X-ray absorption spectra.

The properties of the modified natural graphite particles according to the present invention will be described below in detail.

(1) Circularity

The modified natural graphite particles according to the present invention have a circularity of at least 0.92. If the circularity is less than 0.92, the graphite particles take a flattened shape having a large aspect ratio and easily cause problems such as undesirable orientation during coating and a decrease in the capacity of a battery. The upper limit of the circularity is 1.0 which is the circularity when the particle shape is perfectly spherical. The circularity is preferably at least 0.93.

(2) Peak intensity ratio in C K-edge X-ray absorption spectra

The modified natural graphite particles according to the present invention have an incident angle dependence $S_{60/0}$ of the peak intensity ratio defined by the following equation of at least 0.5 and at most 0.7, with the peak intensity ratio being determined by measurement of C K-edge X-ray absorption spectra using synchrotron radiation as an excitation source:

$$S_{60/0} = I_{60} / I_0$$

where

$$I_{60} = B_{60} / A_{60}$$

$$I_0 = B_0 / A_0$$

$A_{60}$: the intensity of the absorption peak assigned to the transition from C-1s level to $\pi^*$ level (i.e., antibonding orbital of sp2 bond: -C = C-) in a C K-edge X-ray absorption spectrum of particles when measured with synchrotron radiation having an angle of incidence of 60°;
$B_{60}$: the intensity of the absorption peak assigned to the transition from C-1s level to $\sigma^*$ level (i.e., antibonding orbital of sp3 bond: -C -C-) in a C K-edge X-ray absorption spectrum of particles when measured with synchrotron radiation having an angle of incidence of 60°;
$A_0$: the intensity of the absorption peak assigned to the transition from C-1s level to $\pi^*$ level in a C K-edge X-ray absorption spectrum of particles when measured with synchrotron radiation having an angle of incidence of 0°; and
$B_0$: the intensity of the absorption peak assigned to the transition from C-1s level to $\sigma^*$ level in a C K-edge X-ray absorption spectrum of particles when measured with synchrotron radiation having an angle of incidence of 0°.

The reason why the ratio $S_{60/0}$ is limited to a particular range will be described below in detail.

i) Measuring method

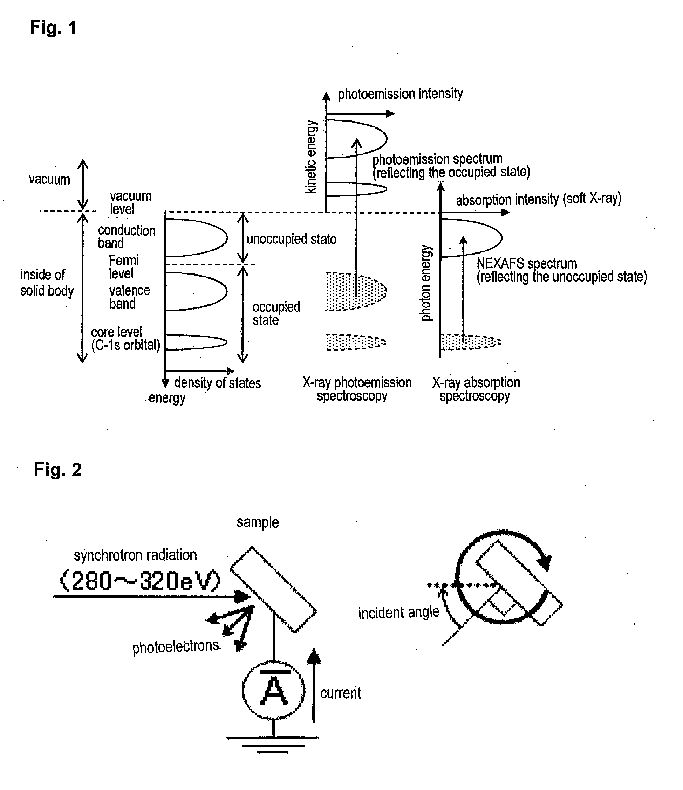

The C K-edge (carbon K-edge) X-ray absorption spectrum, which is also referred to as the C K-edge NEXAFS (Near Edge X-ray Absorption Fine Structure) spectrum, is observed when electrons (i.e., K-shell core electrons) which exist at the inner shell level (1s orbital) of a carbon atom which are in an occupied state are excited to various empty levels which are in an unoccupied state by absorbing the energy of irradiated X-rays.
The principle of X-ray absorption spectroscopy is shown in Figure 1 compared to X-ray photoelectron spectroscopy (XPS).
In the measurement of C K-edge NEXAFS spectra, synchrotron radiation is used as an excitation source. This is because an energy-variable light source in the soft X-ray region (280 eV - 320 eV) is necessary in order to observe the electronic transition from the inner shell level of carbon having a bond energy of 283.8 eV to various empty levels and because the quantitativeness of the $S_{60/0}$ ratio is premised on the excitation source having a high degree of linear polarization.
The empty levels to which electrons at the inner shell level are excited include the $\pi^*$ level which is assigned to an antibonding orbital of a sp2 bond and which reflects the crystallinity (such as basal planes and degree of orientation) of natural graphite, the $\sigma^*$ level which is assigned to an antibonding orbital of a sp3 bond and which reflects disorders of the crystallinity (such as edge planes and the degree of non-orientation), and an empty level assigned to an antibonding orbital such as a C-H bond or a C-O bond. In graphite having a crystal structure comprising stacked hexagonal networks made by sp2 bonds, a plane having the surface of a hexagonal network (an AB plane discussed later) is a basal plane, while a plane in which edges of hexagonal networks appear is an edge plane. In an edge plane, carbon atoms often have sp3 bonds.
A C K-edge NEXAFS spectrum reflects a local structure in the vicinity of a carbon atom including the excited inner-shell electrons, and it also reflects only the surface structure of a graphite particle which is measured because the depth of escape of electrons which are discharged into a vacuum from a solid by the irradiated light is on the order of 10 nm. Accordingly, C K-edge NEXAFS spectra can be used to measure the crystallinity (degree of orientation) of graphite which is present on the surface of a modified natural graphite particle, thereby evaluating the roughness of graphite surface.

There is no particular limitation on a method of fixing modified natural graphite particles which are to be measured to a sample table. In order to avoid a change of the surface properties of a graphite particle due to application of an excess load, it is preferable to employ a method in which the particles are supported on a copper substrate with an In (indium) foil or a carbon tape.

For the measurement of a C K-edge NEXAFS spectrum according to the present invention, a sample is irradiated with synchrotron radiation having an angle of incidence which is fixed with respect to the sample. The measurement is carried out by the total electron yield method in which the electric current which is flowing into the sample in order to supplement the photoelectrons discharged from the sample is measured while the energy of synchrotron radiation which is irradiated is scanned from 280 eV to 320 eV. The basic setup for this measuring method is shown in Figure 2.

ii) Quantitative assessment of the degree of orientation of surface graphite crystal by $S_{60/0}$

As discussed below, it is possible to quantitatively assess the degree of orientation of the graphite crystal of a modified natural graphite particle in the vicinity of the surface (referred to below as the surface graphite crystal) by measuring the value of $S_{60/0}$.

Due to the high linear polarization of synchrotron radiation, when the direction of incidence of synchrotron radiation is parallel with the direction of the bonding axis of sp2 (-C=C-) bonds of a surface graphite crystal, the intensity of an absorption peak assigned to the transition from C-1s level to $\pi^*$ level increases, while it decreases when the two directions are perpendicular to each other.

As a result, in the case of a sample such as highly oriented pyrolytic graphite (HOPG or monocrystalline graphite) in which the sp2 bond-forming graphite crystal is highly oriented in the vicinity of the surface, the spectrum is greatly changed by changing the angle of incidence of synchrotron radiation with respect to the sample, but in the case of a sample such as a vapor-deposited carbon film (amorphous) in which the degree of orientation of the sp2 bond-forming carbon material is low in the vicinity of the surface, the spectrum shape is not changed significantly by changing the angle of incidence of synchrotron radiation with respect to the sample.

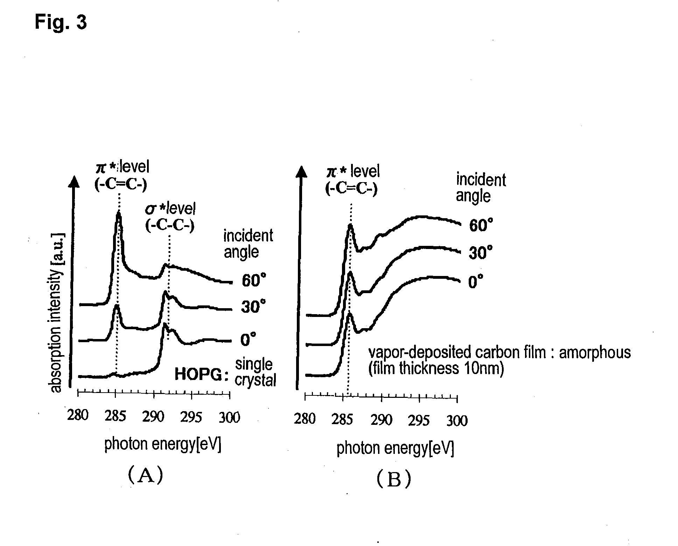

Figures 3(A) and 3(B) show C K-edge NEXAFS spectra when synchrotron radiation is applied with different angles of incidence (0°, 30°, and 60°) with respect to carbon wherein Figure 3(A) is a case in which the carbon is HOPG (Highly Oriented Pyrolytic Graphite), which is monocrystalline, and Figure 3(B) is a case in which the carbon is a vapor-deposited carbon film (with a thickness of 10 nm), which is amorphous. As shown in Figure 3(A), with HOPG which is a monocrystal, when the angle of incidence is increased from 0° to 60°, the intensity of an absorption peak A which is assigned to the transition from C-1s level to $\pi^*$ level increases, while the intensity of an absorption peak B which is assigned to the transition from C-1s level to $\sigma^*$ level decreases. Therefore, the profile of a C K-edge NEXAFS spectrum of HOPG greatly changes depending on the angle of incidence. In contrast, as shown in Figure 3(B), the shape of a C K-edge NEXAFS spectrum of a vapor-deposited carbon film, which is amorphous, scarcely depends on the angle of incidence, so the profile does not significantly change even if the angle of incidence is changed.

Accordingly, if the ratio I (= A/B) of the absorption peak intensity A to the absorption peak B varies depending on the angle of incidence as a result of measurement of C K-edge NEXAFS spectra of a certain graphitic material with different angles of incidence, it is thought that graphite crystals of the material which are present in the vicinity of the surface are arranged with regular alignment, namely with a high degree of orientation. On the contrary, when there is no dependence of the ratio I on the angle of incidence, graphite crystals of the material which are present in the vicinity of the surface are arranged irregularly with a low degree of orientation. Thus, by quantifying the dependence of the ratio I of absorption intensity A to absorption intensity B on the angle of incidence of radiation, it becomes possible to quantitatively assess the degree of orientation of graphite crystals of a graphitic material which are present in the vicinity of the surface.

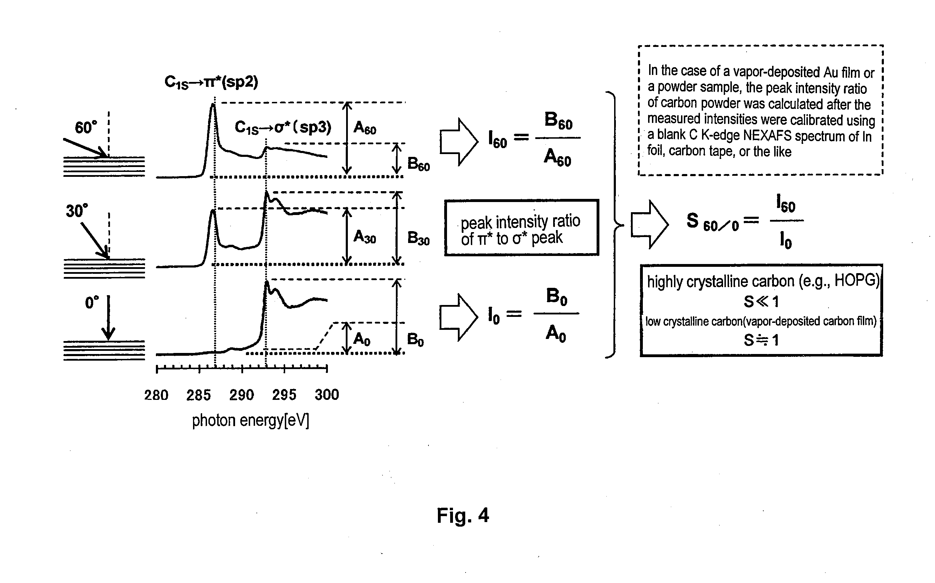

Therefore, in accordance with the present invention, the dependence of the ratio of peak intensity on the angle of incidence $S_{60/0}$ (= $I_{60}/I_0$) which is derived from the ratios $I_{60}$ and $I_0$ of absorption intensity A to absorption intensity B at two angles of incidence, 60° and 0°, respectively is used to quantitatively assess the degree of orientation of graphite crystals which exist in the vicinity of the surface of a graphitic material. Figure 4 is a diagram explaining a method for quantitatively assessing the degree of orientation of surface graphite crystals according to the present invention by taking a case in which the sample is HOPG as an example.

When the value of $S_{60/0}$ is in the vicinity of 1, the degree of orientation of surface graphite crystals is low, and as the value of $S_{60/0}$ is closer to 0 (Figure 4), the degree of orientation of surface graphite crystals is higher.

When sample particles are supported using indium foil or carbon tape in order to determine the value of $S_{60/0}$, the C K-edge NEXAFS spectrum of the support is measured as a blank spectrum, and the intensity of the C K-edge NEXAFS spectrum obtained by measurement of the sample particles is calibrated using the blank spectrum to calculate the intensities of absorption peaks due to the individual transitions.

iii) Relationship between $S_{60/0}$ and the bonding strength of a negative electrode mixture

Modified natural graphite particles according to the present invention are obtained from a flake-shaped raw graphite material and have a circularity of at least 0.92. The raw graphite material is subjected to treatment (referred to below as spheroidizing treatment) in order to make the shape of the entire raw graphite material close to spherical and thereby obtain the above-mentioned circularity. Specific examples of the spheroidizing treatment include the treatments disclosed in Patent Documents 2 - 4.

The flake-shaped graphite used as a raw material is a crystal composed of a great number of hexagonal network planes (AB planes) stacked on one another, each plane having carbon atoms which regularly form a planar network, and the crystal has a thickness in the C direction which is perpendicular to the AB planes. Peeling between the AB planes easily takes place because the bonding force between the stacked AB planes (van der Waals force) is much smaller than the bonding force of the AB planes in the in-plane direction. Therefore, the thickness of the stacked planes is thin compared to the extent of the AB planes, thereby providing a flake shape as a whole.

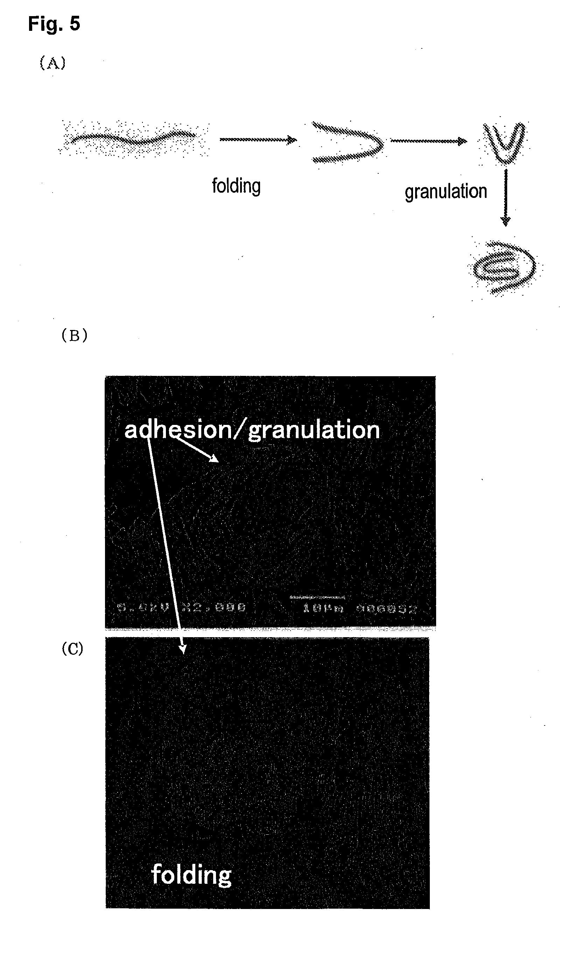

As shown in Figures 5(A) to 5(C), when the flake-shaped raw graphite material undergoes spheroidizing treatment, the raw graphite material which  originally had a nearly planar form is folded, incorporated into another particle when the particle is folded, or adheres to the surface of another particle.

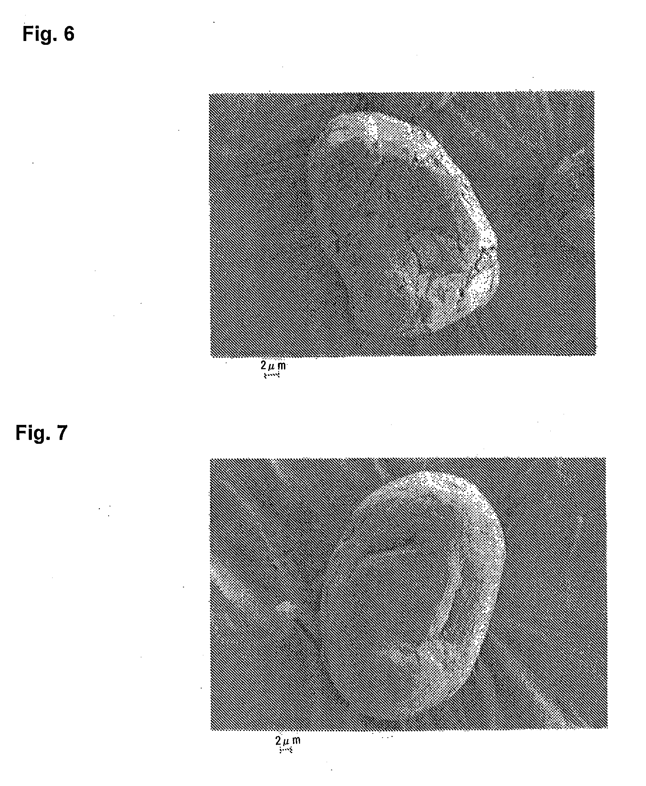

Therefore, in a macroscopic view, the surface of a graphite particle obtained by spheroidizing treatment of a raw graphite material (referred to below as spheroidized graphite particle) is mostly covered by the surface (an AB plane) of the raw graphite material which was planar. Accordingly, it is thought that the surface of the spheroidized graphite particle is predominantly constituted by AB planes. However, as shown in Figure 6, when a spheroidized graphite particle is observed with magnification, there are many irregularities because an end face of a folded particle or an end face of an attached particle, namely, an edge plane is exposed on the surface of the particle. Furthermore, in a microscopic view, the impact force applied during the spheroidizing treatment causes portions of the AB planes to be peeled off and folded, resulting in the formation of portions in which an edge plane is exposed on the surface of the particle.

Such surface irregularities cause the surface of a spheroidized graphite particle to have a rough surface. Therefore, the bonding axes of sp2 bonds in graphite crystals existing in the vicinity of the surface of a spheroidized graphite particle have random directions. As a result, a spheroidized graphite particle has a circularity of at least 0.92, but its value of $S_{60/0}$ is in the vicinity of 1.

If a spheroidized graphite particle having surface properties which are made rough by spheroidizing treatment, namely, a spheroidized graphite particle having a circularity of at least 0.92 and a value of $S_{60/0}$ in the vicinity of 1 is used as a negative electrode active material, only the protruding portions of the rough surface of the spheroidized graphite particle can form contact portions between particles of the negative electrode active material or between a particle of the negative electrode active material and a current collector. A binder which constitutes a negative electrode mixture along with a negative electrode active material essentially serves to bond particles of the negative electrode active material to each other or the negative electrode active material to the current collector by being supplied to the above-described contact portions. Therefore, use of the above-described spheroidized graphite particle as a negative electrode active material results in the formation of a negative electrode mixture which has low bonding properties and  which is easily peeled off from a current collector.

In contrast, a modified natural graphite particle according to the present invention has a circularity of at least 0.92 and a value of $S_{60/0}$ of 0.7 or less, indicating that although it has undergone spheroidizing treatment, the particle has surface graphite crystals which are oriented to some extent. In portions of the surface graphite particles which are oriented, the AB planes are very flat with minimized defects such as folding, so a negative electrode material made of this graphite particle can form a relatively large contact portion with an adjacent negative electrode material or with a current collector.

As a result, use of a modified natural graphite particle according to the present invention as a negative electrode active material makes it possible to obtain a negative electrode mixture which has good bonding properties and which is difficult to peel off from a current collector.

There is no particular lower limit on the value of $S_{60/0}$ of a modified natural graphite particle according to the present invention as long as it has a circularity of at least 0.92. However, a practical lower limit is 0.5. If the value of $S_{60/0}$ is less than 0.5, it is quite difficult in actuality to make the circularity at least 0.92.

(3) Tap density

A modified natural graphite particle according to the present invention preferably has a tap density of at least 1.0 g/cm$^3$ and at most 1.4 g/cm$^3$ as measured by tapping 180 times using a vessel having a capacity of 100 cm$^3$.

By having a tap density of at least 1.0 g/cm$^3$, the packing density of a negative electrode active electrode in a negative plate is increased. The tap density is preferably at least 1.05 g/cm$^3$. Graphite particles manufactured by subjecting a raw graphite material to only spheroidizing have rough surfaces, so it is not easy for them to have an increased tap density. The higher the tap density the better. However, in actuality, the upper limit on the tap density is 1.4 g/cm$^3$.

(4) Linseed oil absorption

A modified natural graphite particle according to the present invention preferably has linseed oil absorption of at least 20 cm$^3$/100 g and at most 50 cm$^3$/100 g as measured by an absorption tester generally in accordance with the method for measuring an absorbed oil amount defined in JIS K 6217-4:2008.
Graphite particles manufactured by subjecting a raw graphite material to only spheroidizing have excessively rough surfaces, so they tend to show increased linseed oil absorption. Excessively high linseed oil absorption results in a decrease in the efficiency of utilization of a binder, thereby making it difficult to increase capacity. Therefore, the linseed oil absorption is preferably at most 50 cm$^3$/100 g. The lower the linseed oil absorption the better. However, in actuality, the lower limit on the linseed oil absorption is 20 cm$^3$/100 g.

(5) Coating layer

A modified natural graphite particle according to the present invention having the above-described properties may be a carbon-deposited graphite particle having a carbonaceous material adhering to its surface. As a result, it has an improved battery performance.
The term carbonaceous material as used herein refers to a material which predominantly comprises carbon. Its structure is not critical. The carbonaceous material may either adhere to a portion of the surface of a modified natural graphite particle or adhere such that substantially the entire surface of the particle is coated with the carbonaceous material.
Preferably, the carbonaceous material has a lower crystallinity than the modified natural graphite particle which is a core to be coated and/or a higher proportion of sp3 bonds in all the carbon-carbon bonds. Such a carbonaceous material has a higher bulk hardness than a graphite particle. Therefore, the presence of the carbonaceous material by adhesion on the surface of the modified natural graphite particle increases the hardness of the entire particle. As a result, in the process for manufacturing a negative plate, particularly in its compression step, there is a minimized possibility of charge acceptance decreasing due to the formation of closed pores inside an electrode comprising a negative electrode active material. In addition, as can be seen from the below-described examples, adhesion of carbon results in a decrease of the surface area of a graphite particle, so the reactivity of the particle with an electrolytic solution is suppressed. Accordingly, a negative plate comprising such carbon-deposited graphite particles as an active material is improved with respect to charge-discharge efficiency and battery capacity.
An example of a carbonaceous material having a lower crystallinity than a modified natural graphite particle which is a core is turbostratic carbon. The term turbostratic carbon as used herein means a carbon material in which carbon atoms form a layer structure stacked parallel to the direction of a hexagonal network plane but their crystalline regularity in the three-dimensional direction cannot be measured.
An example of a carbonaceous material having a lower crystallinity and a higher proportion of sp3 bonds than a modified natural graphite particle which is a core is amorphous carbon. The term amorphous carbon as used herein means a carbon material which has a short range order (an order from several atoms to ten-some atoms) but does not have a long range order (an order from several hundred to several thousand atoms).
There are no particular limitations on a method of adhering or coating a carbonaceous material on the surface of a graphite particle serving as a core. Typical examples are a surface treatment method and a deposition method using vacuum film forming techniques. A surface treatment method is a method in which an organic compound such as pitch is previously adhered to or coated on at least a portion of the surface of graphite powder and heat treatment is then performed to carbonize the organic compound. This method results in the formation of a carbonaceous material made of turbostratic carbon. By a vacuum film forming technique, a carbonaceous material made of amorphous carbon can be deposited on the surface of a core.

3. Method of manufacturing a modified natural graphite particle

A modified natural graphite particle according to the present invention may be manufactured by any manufacturing method as long as the particle has the above-described properties. One method capable of stably and efficiently producing a modified natural graphite particle having the above-described properties is described below, The conditions in each treatment step can be suitably adjusted so that a modified natural graphite particle having the above-described properties is obtained.

(1) Spheroidizing treatment

A raw natural graphite particle can be spheroidized using an impact-type pulverizing device such as a jet mill or a pin mill. As shown in Figures 5(A) to 5(C), this type of device causes raw natural graphite particles to impinge against pins or the like at a high velocity, thereby resulting in a decrease in the aspect ratio of the graphite particles due to bending of the stacked AB planes or adhesion of other particles.

However, as shown in Figure 6, numerous minute surface irregularities (depressions and protrusions) are present on the surface of a graphite particle which has undergone spheroidizing treatment (spheroidized graphite particle) due to turning-up or peeling of a portion of the stacked AB planes or exposure of an end face on the surface of the particle. As a result, the particle has a rough surface. Spheroidizing is carried out such that graphite particles having a circularity of at least 0.92 are obtained.

(2) Smoothening treatment

Mechanical grinding treatment is applied to the spheroidized particle obtained above, thereby making its surface smoothen and making it possible to obtain a modified natural graphite particle according to the present invention.

Mechanical grinding treatment is carried out in order to round angular portions of a particle and smoothen minute surface irregularities of the particle. For this purpose, for example, an apparatus which repeatedly imparts mechanical actions including interactions between particles such as compression, friction, and shear to particles can be used. A powder processing apparatus manufactured by Hosokawa Micron Corporation (Circulating Mechano Fusion System AMS-Lab), a Theta Composer manufactured by Tokuju Corporation, or the like can be used as an apparatus for carrying out mechanical grinding.

With such an apparatus, graphite particles are allowed to pass through a gap formed by two solid bodies which are in movement relative to each other with a small spacing therebetween (for example, a rotor and an inner piece), thereby imparting a strong sliding force in the in-plane direction to the surface of the graphite particles. Therefore, when the graphite particles pass through the gap, the crystals in the location of the particles which undergo sliding are oriented in the sliding direction. Namely, exposed folded end faces of the particles or end faces of adhered particles are covered by the AB planes as a result of sliding occurring between AB plane layers. In addition, portions of the AB planes in which an edge portion faces toward the surface of the particle due to peeling or folding which are present in some places of the AB planes are compressed and oriented.

In this manner, as shown in Figure 7, the surface of a spheroidized graphite particle is smoothened by smoothening treatment such as mechanical grinding treatment, and the resulting modified natural graphite particle has surface graphite crystals with an increased degree of orientation. As a result, it is possible to obtain a modified natural graphite particle according to the present invention which has a circularity of at least 0.92 and a value for $S_{60/0}$ of at most 0.7.

A modified natural graphite particle according to the present invention and a carbon-deposited graphite particle having a core of the modified natural graphite particle can be used as an active material to manufacture a negative plate for a non-aqueous electrolyte secondary battery. There are no particular limitations on a binder and current collector used in the manufacture of a negative electrode, and each may be one which has conventionally been used. According to the present invention, because the surface of graphite particles used as an active material is smoothened and the contact area of the graphite particles with each other or with a current collector is increased, it is possible to decrease the amount of a binder compared to the prior art, thereby making it possible to manufacture an electrode having a higher density and a higher capacity.

EXAMPLES

[Examples 1 - 4 and Comparative Examples 1 - 4]

(1) Manufacture of modified natural graphite particles

Raw natural graphite particles (flake graphite produced in China with an absolute specific gravity of 2.26 g/cm$^3$) were subjected to spheroidizing treatment using a pulverizer manufactured by Hosokawa Micron Corporation (ACM Pulverizer, Model ACM-10A). The treatment was repeatedly performed 15 times. Subsequently, dust was removed by air classification. By carrying out the spheroidizing treatment with suitably different rotational speeds in the pulverization and classification, four types of spheroidized graphite particles having different particle sizes which are shown as Comparative Examples 1 - 4 in Table 1 were obtained.

Some of these graphite particles were further subjected to smoothening treatment using a Mechano Fusion System manufactured by Hosokawa Micron Corporation (AMS-Lab). The conditions for treatment were as follows:

Input amount of particles: 600 grams
Gap between rotor and inner piece: 5 mm
Rotational speed: 2600 rpm
Length of treatment: 15 minutes.

By the smoothening treatment, modified natural graphite particles shown as Examples 1 - 4 in Table 1 were obtained.

The properties ($S_{60/0}$, mean particle diameter, circularity, specific surface area, tap density, and linseed oil absorption) of each of the resulting spheroidized graphite particles of Comparative Examples 1 - 4 and modified natural graphite particles of Examples 1 - 4 were determined by the methods described below, and the results are shown in Table 1. The absolute specific density of these graphite particles is not shown in Table 1, but was the same as that of the raw graphite particles (2.26 g/cm$^3$).

(2) Preparation of negative plates

A negative electrode active material consisting of spheroidized graphite particles or modified natural graphite particles obtained by the above-described method was mixed with a binder to prepare two types of negative electrode mixtures (negative electrode mixtures 1 and 2).

[Negative electrode mixture 1]

The graphite particles were mixed with a binder consisting of a styrenebutadiene rubber (SBR) and sodium carboxymethylcellulose (CMC) to prepare a negative electrode mixture. The proportions (mass ratio) of the components in the negative electrode mixture were as follows:

negative electrode active material : SBR : CMC = 98 : 1 : 1.

[Negative electrode mixture 2]

The graphite particles were mixed with a polyvinylidene fluoride (PVdF) as a binder. The proportions (mass ratio) of the components in the negative electrode  mixture were as follows:

negative electrode active material : PVdF = 9 : 1.

Each negative electrode mixture was applied to an electrolytic copper foil (with a thickness of 17 $\mu$m) serving as a current collector, then dried (for 20 minutes at 75° C for negative electrode mixture 1 or for 20 minutes at 100° C for negative electrode mixture 2), and compressed by uniaxial pressing to obtain a negative plate. The negative electrode mixture layer in each of the resulting negative plates was 9 mg/cm$^2$ and its density was 1.6 g/cm$^3$. The peel strength of each negative plate was measured by the below-described method, and the result is shown in Table 1.

(3) Measurement methods

i) $S_{60/0}$

Measurement of a C K-edge NEXAFS spectrum was carried out using Beamlines BL7B and BL9 in the NewSUBARU synchrotron radiation facility installed by Hyogo prefecture in the Spring-8 site and managed by the Laborary of Advanced Science and Technology for Industry of the University of Hyogo. The excitation light source was synchrotron radiation which was discharged when electrons accumulated in a storage ring with an acceleration voltage of 1.0 - 1.5 GeV and a storage ring current of 80 - 350 mA were passed along a serpentine path through an inserted light source referred to as an undulator. Using a C K-edge NEXAFS spectrum measuring device installed in the Beamlines BL7B and BL9, C K-edge NEXAFS spectra were measured for the graphite particles of each of the Examples and Comparative Examples. The value of $S_{60/0}$ was calculated from the spectrum profiles obtained at incident angles of 0° and 60°. The details of the principle of measurement and measuring method are described above. The support used to support sample particles was an In foil.

ii) Mean particle diameter (indicated as d50 in Table 1)

A particle size distribution on a volume basis of the graphite particles in each example was measured by the light diffraction/dispersion method using a laser diffraction/dispersion particle size analyzer (LA-910) manufactured by Horiba, Ltd. The median diameter in the resulting particle size distribution was taken as the mean particle diameter of the graphite particles.

iii) Circularity

The circularity of the graphite particles in each example was measured using a flow particle image analyzer (FPIA-2100) manufactured by Sysmex Corporation. Specifically, at least 5000 of the graphite particles were the subject of measurement. A flat sample stream in the form of a dispersion of the particles in a dispersion medium formed by addition of polyoxyethylene sorbitan monolaurate as a surfactant to deionized water was photographed, and the resulting image of the particles was subjected to image analysis to determine the circularity.

iv) Specific surface area

The specific surface area was determined by the BET 1-point method using a Quantasorb manufactured by Yuasa Ionics Co., Ltd.

v) Tap density

Using a Model PT-N Powder Tester (registered trademark) manufactured by Hosokawa Micron Corporation, tapping of the graphite particles in each example was carried out 180 times in a vessel having a capacity of 100 $cm^3$, and the apparent specific density was then measured and taken as the tap density.

vi) Linseed oil absorption

The linseed oil absorption of the graphite particles in each example was measured generally in accordance with the oil absorption measuring method defined in JIS K 6217-4:2008 using a Model S-410 Absorption Tester manufactured by Asahisouken Co., Ltd. Specifically, linseed oil was added at a rate of 4 $cm^3$/min to graphite particles which were being stirred with two blades. The change in the viscosity at this time was detected with a torque sensor and converted into torque. The added amount of linseed oil corresponding to 100% of the maximum generated torque was converted to the amount per 100 g of graphite particles to determine the linseed oil absorption.

vii) Peel strength

The peel strength was determined generally in accordance with JIS C 6481. Specifically, a strip of a negative plate cut to a width of 15 mm was placed on a table and secured thereto with double-sided tape (NW-K15 manufactured by Nichiban Co. Ltd.) so that the negative electrode mixture was facing down. The current collector forming the upper surface of the secured negative plate was pulled vertically with respect to the top surface of the table at a speed of 50 mm/min to peel off the strip by a length of 50 mm. The load for peeling at this time was continuously measured, and the smallest value of the load was recorded as the peel strength (N/m).

Table 1

| | $S_{60/0}$ | d50 (μm) | SSA* ($m^2$/g) | Tap density (g/$cm^3$) | Circularity | Oil absorption (mL/ 100g) | Mixture 1 | | Mixture 2 | |
|---|---|---|---|---|---|---|---|---|---|---|
| | | | | | | | Peel strength (N/m) | Ratio[1] | Peel strength (N/m) | Ratio[1] |
| Example 1 | 0.51 | 14.7 | 7.5 | 1.05 | 0.93 | 46.0 | 27 | 1.80 | 15 | 7.50 |
| Example 2 | 0.65 | 18.2 | 6.0 | 1.09 | 0.94 | 42.1 | 31 | 1.72 | 41 | 2.73 |
| Example 3 | 0.68 | 21.0 | 4.9 | 1.10 | 0.94 | 41.0 | 35 | 1.84 | 45 | 2.65 |
| Example 4 | 0.55 | 24.5 | 4.3 | 1.06 | 0.93 | 46.5 | 32 | 1.88 | 38 | 2.11 |

(continued)

| | $S_{60/0}$ | d50 ($\mu$m) | SSA* ($m^2$/g) | Tap density (g/$cm^3$) | Circularity | Oil absorption (mL/ 100g) | Mixture 1 | | Mixture 2 | |
|---|---|---|---|---|---|---|---|---|---|---|
| | | | | | | | Peel strength (N/m) | Ratio[1] | Peel strength (N/m) | Ratio[1] |
| Comp. 1 | 0.79 | 14.7 | 7.5 | 1.00 | 0.93 | 53.0 | 15 | --- | 2 | --- |
| Comp. 2 | 0.84 | 18.2 | 6.0 | 1.05 | 0.94 | 50.2 | 18 | --- | 15 | --- |
| Comp. 3 | 0.88 | 21.1 | 4.9 | 1.05 | 0.94 | 50.1 | 19 | --- | 17 | --- |
| Comp. 4 | 0.75 | 24.5 | 4.2 | 1.01 | 0.93 | 54.8 | 17 | --- | 18 | --- |
| *SSA=Specific surface area; ** Comp.=Comparative Example [1] Strength ratio of peel strength after smoothening/before smoothening | | | | | | | | | | |

The strength ratio in Table 1 is a ratio of peel strength after smoothening treatment to peel strength before smoothening treatment, and specifically it is determined by dividing the peel strength in Example 1 by the peel strength in Comparative Example, for example.

As can be seen from Table 1, the graphite particles of Comparative Examples 1 - 4 which were obtained by spheroidizing treatment had a circularity of at least 0.92, but they had a large value of $S_{60/0}$ which was in the range of 0.75 - 0.88 with their linseed oil absorption exceeding 50 $cm^3$ per 100 grams. In contrast, the graphite particles of Examples 1 - 4 which further underwent smoothening treatment had a decreased value of $S_{60/0}$ in a range of 0.51 - 0.68 and their linseed oil absorption also decreased to less than 50 $cm^3$ per 100 grams. Comparing corresponding Examples and Comparative Examples (e.g., Example 1 and Comparative Example 1), the tap density in the Examples was higher than that in  the Comparative Example.

Compared to the spheroidized graphite particles in Comparative Examples 1 - 4, the modified natural graphite particles in Examples 1 - 4 according to the present invention had a peel strength which was increased by a factor of 1.72 to 1.88 for Mixture 1 or by a factor of 2.11 to 7.50 for Mixture 2, and it was confirmed that the peel strength was significantly improved.

[Example 5 and Comparative Example 5]

The graphite particles obtained in each of Example 2 and Comparative Example 2 were mixed with a coal-derived pitch powder having a mean particle diameter of 15 $\mu$m in a proportion of 20 mass % based on the mass of the graphite particles. The mixture was heat-treated for 1 hour at 1000° C in a nitrogen stream to obtain carbon-deposited graphite particles having turbostratic carbon adhering to the surface of the graphite particles. The mean particle diameter, specific surface area, tap density, and linseed oil absorption of the resulting carbon-deposited graphite particles were determined in the same manner as in Examples 1 - 4. The results are shown in Table 2.

The carbon-deposited graphite particles which were obtained in this manner were used as a negative electrode active material and were mixed with PVdF at a mass ratio of 95 : 5 to prepare negative electrode mixtures. The negative electrode mixtures were used to manufacture negative plates in the same manner as in Examples 1 - 4. The peel strength of each of the resulting negative plates was measured in the same manner as in Example 1 - 4, and the results are shown in Table 2 along with the value of the strength ratio.

Table 2

| | d50 ($\mu$m) | Specific surface area ($m^2$/g) | Tap density (g/$cm^3$) | Oil absorption (mL/100g) | Peel strength (N/m) | Strength ratio (After/Before smoothening treatment) |
|---|---|---|---|---|---|---|
| Example 5 | 18.5 | 0.6 | 1.30 | 27.0 | 89.0 | 2.28 |
| Comp. Ex. 5 | 18.4 | 0.6 | 1.21 | 36.1 | 39.0 | --- |

As can be seen from Table 2, in Example 5 in which the core was a modified natural graphite particle according to the present invention, the peel strength was 2.28 times as high as that in Comparative Example 5 in which the core was a spheroidized graphite particle. It can be seen by comparison between Tables 1 and 2 that by carrying out the carbon deposition treatment, a graphite particle had a significantly decreased specific surface area and an increased tap density, but its mean particle diameter was little increased. In these examples, because the coal-derived pitch powder used for the formation of a carbonaceous material was used in a relatively large amount, it is thought that nearly all the surfaces of the graphite particles were coated with a carbonaceous material (turbostratic carbon). As a result, fine surface irregularities were filled, leading to a significant decrease in specific surface area.

[Example 6 and Comparative Example 6]

The graphite particles obtained in each of Example 3 and Comparative Example 3 were mixed with a coal-derived pitch powder having a mean particle diameter of 15 $\mu$m in a proportion of 2 mass % based on the mass of the graphite particles. The mixture was heat-treated for 1 hour at 1000° C in a nitrogen stream to obtain carbon-deposited graphite particles having turbostratic carbon adhering to the surface of the graphite particles. The mean particle diameter, specific surface area, tap density, and linseed oil absorption of the resulting carbon-deposited graphite particles were determined in the same manner as in Examples 1 - 4. The results are shown in Table 3.

The carbon-deposited graphite particles which were obtained in this manner were used as a negative electrode active material and were mixed with SBR and CMC at a mass ratio of 98 : 1 : 1 to prepare negative electrode mixtures. The negative electrode mixtures were used to manufacture negative plates in the same manner as in Examples 1 - 4. The peel strength of each of the resulting negative plates was measured in the same manner as in Examples 1 - 4, and the results are shown in Table 3 along with the value of the strength ratio.

Table 3

| | d50 ($\mu$m) | Specific surface area ($m^2$/g) | Tap density (g/$cm^3$) | Oil absorption (mL/100g) | Peel strength (N/m) | Strength ratio (After/Before smoothening treatment) |
|---|---|---|---|---|---|---|
| Example 6 | 21.1 | 3.6 | 1.20 | 37.8 | 32.9 | 1.89 |
| Comp. Ex. 6 | 21.1 | 3.6 | 1.11 | 45.1 | 17.4 | --- |

As can be seen from Table 3, in Example 6 in which the core was a modified natural graphite particle according to the present invention, the peel strength was 1.89 times as high as that in Comparative Example 6 in which the core was a spheroidized graphite particle. In these examples, because the coal-derived pitch powder used for the formation of a carbonaceous material was used in a small amount of 2 mass % of the graphite particles, it is thought that only a portion of the surfaces of the graphite particles was coated with a carbonaceous material in the form of turbostratic carbon. Even in this case, the specific surface area of the graphite particles was decreased to some extent. This is thought to be because molten pitch preferentially adheres to edge planes of the graphite particles which have a larger surface area than basal planes.

**Claims**

1.  Modified natural graphite particles **characterized by** having a circularity of at least 0.92 and having an incident angle dependence $S_{60/0}$ of the peak intensity ratio defined by the following equation of at least 0.5 and at most 0.7, the peak intensity ratio being determined by measurement of C K-edge X-ray absorption spectra using synchrotron radiation as an excitation source:

$$S_{60/0} = I_{60} / I_0$$

where

$$I_{60} = B_{60} / A_{60}$$

$$I_0 = B_0 / A_0$$

$A_{60}$: the intensity of the absorption peak assigned to the transition from C-1s level to $\pi^*$ level in a C K-edge X-ray absorption spectrum of particles when measured with synchrotron radiation having an angle of incidence of 60°;

$B_{60}$: the intensity of the absorption peak assigned to the transition from C-1s level to $\sigma^*$ level in a C K-edge X-ray absorption spectrum of particles when measured with synchrotron radiation having an angle of incidence of 60°;

$A_0$: the intensity of the absorption peak assigned to the transition from C-1s level to $\pi^*$ level in a C K-edge X-ray absorption spectrum of particles when measured with synchrotron radiation having an angle of incidence of 0°; and

$B_0$: the intensity of the absorption peak assigned to the transition from C-1s level to $\sigma^*$ level in a C K-edge X-ray absorption spectrum of particles when measured with synchrotron radiation having an angle of incidence of 0°.

2. Modified natural graphite particles as claimed in claim 1 having an absolute specific gravity of at least 2.25 (g/cm$^3$).

3. Modified natural graphite particles as claimed in claim 1 or 2 having a tap density of at least 1.0 g/cm$^3$ and at most 1.4 g/cm$^3$.

4. Modified natural graphite particles as claimed in any of claims 1 to 3 having linseed oil absorption of at least 20 cm$^3$/100 g and at most 50 cm$^3$/100 g.

5. Carbon-deposited graphite particles comprising modified natural graphite particles as claimed in any of claims 1 to 4 and a carbonaceous material adhering to at least a portion of the surface of the graphite particles.

**Fig. 1**

photoemission intensity

kinetic energy

photoemission spectrum
(reflecting the occupied state)

absorption intensity (soft X-ray)

vacuum

vacuum
level

conduction
band

Fermi
level

inside of
solid body

valence
band

photon energy

NEXAFS spectrum
(reflecting the unoccupied state)

unoccupied state

occupied
state

core level
(C-1s orbital)

density of states
energy

X-ray photoemission
spectroscopy

X-ray absorption
spectroscopy

**Fig. 2**

sample

synchrotron radiation

〈280～320eV〉

photoelectrons.

incident angle

A

current

EP 2 695 857 A1

**Fig. 3**

(A)

(B)

17

$$C_{1S} \rightarrow \pi^*(sp2)$$

$$C_{1S} \rightarrow \sigma^*(sp3)$$

60°

30°

0°

$$I_{60} = \frac{B_{60}}{A_{60}}$$

peak intensity ratio of π* to σ* peak

$$I_0 = \frac{B_0}{A_0}$$

In the case of a vapor-deposited Au film or a powder sample, the peak intensity ratio of carbon powder was calculated after the measured intensities were calibrated using a blank C K-edge NEXAFS spectrum of In foil, carbon tape, or the like

$$S_{60/0} = \frac{I_{60}}{I_0}$$

highly crystalline carbon (e.g., HOPG)
$$S \ll 1$$
low crystalline carbon(vapor-deposited carbon film)
$$S \fallingdotseq 1$$

280  285  290  295  300

photon energy[eV]

**Fig. 4**

**Fig. 5**

(A)

folding → granulation

(B)

adhesion/granulation

(C)

folding

**Fig. 6**

2 μ m

**Fig. 7**

2 μ m

<table>
<tr><td colspan="2" align="center">**INTERNATIONAL SEARCH REPORT**</td><td>International application No.<br>PCT/JP2012/059059</td></tr>
</table>

A. CLASSIFICATION OF SUBJECT MATTER
*C01B31/04*(2006.01)i, *H01M4/36*(2006.01)i, *H01M4/587*(2010.01)i

According to International Patent Classification (IPC) or to both national classification and IPC

B. FIELDS SEARCHED

Minimum documentation searched (classification system followed by classification symbols)
C01B31/04, H01M4/36, H01M4/587

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2009-209035 A (Mitsubishi Chemical Corp.), 17 September 2009 (17.09.2009), claims 1 to 3, 19; paragraphs [0013], [0128] to [0148] & US 2011/0059371 A1 & EP 2242133 A1 & WO 2009/099029 A1 & CN 101939865 A & KR 10-2010-0120137 A | 1-5 |
| A | JP 2009-238584 A (Hitachi Chemical Co., Ltd.), 15 October 2009 (15.10.2009), entire text (Family: none) | 1-5 |
| A | JP 2008-305661 A (Tokai Carbon Co., Ltd.), 18 December 2008 (18.12.2008), entire text (Family: none) | 1-5 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>　14 June, 2012 (14.06.12) | Date of mailing of the international search report<br>　26 June, 2012 (26.06.12) |
| Name and mailing address of the ISA/<br>　Japanese Patent Office | Authorized officer |
| Facsimile No. | Telephone No. |

Form PCT/ISA/210 (second sheet) (July 2009)

EP 2 695 857 A1

**INTERNATIONAL SEARCH REPORT**

International application No.

PCT/JP2012/059059

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2000-3708 A  (Osaka Gas Co., Ltd.), 07 January 2000 (07.01.2000), entire text (Family: none) | 1-5 |

Form PCT/ISA/210 (continuation of second sheet) (July 2009)

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007169160 A
- JP 11263612 A
- JP 2003238135 A
- JP 2008024588 A

**Non-patent literature cited in the description**

- **K. OHZEKI et al.** *Tanso,* 2005, 99-103